# EUROPÄISCHE PATENTSCHRIFT

(11) **EP 0 867 696 B1**
(45) Veröffentlichungstag und Bekanntmachung des Hinweises auf die Patenterteilung: **11.08.2004**
(21) Anmeldenummer: 98105518.9
(22) Anmeldetag: 26.03.1998
(51) Int. Cl.: G01G 13/24

(54) **Vorrichtung und Verfahren zur gravimetrischen Dosierung rieselfähiger Schüttgutkomponenten**
Method and apparatus for gravimetric dosing of flowable bulk material components
Procédé et dispositif pour le dosage gravimétrique des composants coulant de matières en vrac

(30) Priorität: 26.03.1997 DE 19712600
(43) Veröffentlichungstag der Anmeldung: 30.09.1998
(73) Patentinhaber: Mann + Hummel ProTec GmbH, 71636 Ludwigsburg (DE)
(72) Erfinder: Vollmar, Hartmut, 53773 Hennef-Rott (DE)
(74) Vertreter: Voth, Gerhard, Dipl.-Ing.

(56) Entgegenhaltungen:
- DE-A- 2 526 899
- DE-B- 1 029 581
- FR-A- 1 024 845
- US-A- 2 141 296
- US-A- 2 641 459
- US-A- 3 109 503
- US-A- 3 186 503
- US-A- 5 148 943

## Beschreibung

Die Erfindung betrifft eine Vorrichtung zur gravimetrischen Dosierung rieselfähiger Schüttgutkomponenten zu einer Charge für eine Verarbeitungsmaschine, enthaltend ein Wiegegefäß, welches über Aufgabeeinrichtungen mit den zu dosierenden Schüttgutkomponenten befüllbar ist, wobei das Wiegegefäß von einem Wiegeorgan freibeweglich getragen ist, so daß eine Auswiegung und davon abhängige Steuerung der Aufgabeeinrichtungen der Schüttgutkomponenten ermöglicht ist und das Wiegegefäß nach seiner Befüllung mit einer Charge entleerbar ist.

Die Erfindung betrifft weiterhin ein Verfahren zur gravimetrischen Dosierung mehrerer Schüttgutkomponenten zu einer Charge unter Einsatz einer solchen Wiegevorrichtung.

Vorrichtungen zur gravimetrischen Dosierung finden beispielsweise an Kunststoffverarbeitungsmaschinen Verwendung, indem mit ihrer Hilfe ein Rohstoffgemisch, bestehend aus zum Beispiel einem Basispolymer und üblicherweise weiteren Zusatzstoffen, wie Färbemitteln und Hilfsstoffen der Verarbeitungsmaschine genau dosiert zugeführt werden.

Aus der DE 1 029 581 ist eine automatische Waage mit umlaufender ein- oder mehrkammeriger Wiegetrommel bekannt. Die Wiegetrommel läuft mit konstanter Geschwindigkeit um und ist mit einer Steuerwelle gekuppelt, deren Nocken den periodischen Wiegevorgang steuern.

Es ist ferner aus der FR 1.024.845 eine Wiegeeinrichtung zu entnehmen, bei welcher eine Wiegetrommel an einem Wiegebalken aufgehängt ist und wobei die Wiegetrommel zwei Einfüllöffnungen zum Befüllen und Entleeren aufweist.

Aus der DE 36 17 200 C2 ist eine Vorrichtung zur gravimetrischen Dosierung an einem Extruder bekannt, bei der die Schüttgutkomponenten in einen Wiegetrichter eingefüllt und ausgewogen werden, wobei der Wiegetrichter an seiner unterseitigen Auslaßöffnung mittels einer öffenbaren Klappe verschlossen ist und nach dem Einfüllen einer Charge der Schüttgutkomponenten durch Betätigen der Klappe eine Entleerung der Charge in die Einfüllöffnung des Extruders erfolgt. Nachteilig bei dieser bekannten Bauform einer gravimetrischen Dosiervorrichtung ist, daß zum einen das Betätigen der Verschlußklappe des Wiegetrichters insbesondere bei größerem Fassungsvermögen desselben unerwünschte Erschütterungen der gesamten Dosiervorrichtung hervorruft, die sich negativ auf die Meßgenauigkeit auswirken, zum anderen der Entleerungsvorgang bis zum Wiederverschließen durch die Auslaßöffnung des Trichters eine gewisse Zeitdauer in Anspruch nimmt, in der ein emeutes Befüllen des Wiegetrichters noch nicht möglich ist. Auf Grund der Bauweise des Wiegegefäßes als Trichter ist zwar die Einlaßöffnung groß, jedoch die Auslaßöffnung relativ klein. Insbesondere bei sehr leistungsfähigen Verarbeitungsmaschinen führt diese Zwangspause bei der erneuten Befüllung des Wiegetrichters zu einer unerwünschten Leistungsbeschränkung der Verarbeitungsmaschine, da die benötigten Chargenmengen nicht schnell genug bereitgestellt werden können.

Zur Überwindung der Nachteile des bekannten Standes der Technik soll daher mit der Erfindung eine Vorrichtung zur gravimetrischen Dosierung rieselfähiger Schüttgutkomponenten vorgeschlagen werden, die eine genaue Auswiegung der einzelnen Komponenten ermöglicht, wobei Stillstandszeiten zwischen dem Befüllen und Entleeren der Wiegeeinrichtung minimiert werden und die sich mit niedrigen Kosten wirtschaftlich herstellen läßt.

Diese Ziele werden erfindungsgemäß mit einer Vorrichtung zur gravimetrischen Dosierung gemäß den kennzeichnenden Merkmalen des Patentanspruches 1 erreicht.

Vorteilhafte Ausgestaltungen der Erfindung sind den Unteransprüchen entnehmbar.

In Weiterbildung der bekannten Vorrichtungen zur gravimetrischen Dosierung schlägt die Erfindung vor, daß das Wiegegefäß in zwei Wiegeräume unterteilt ist, deren Einfüllöffnungen um 180° versetzt zueinander ausgebildet sind und das Wiegegefäß um eine parallel zu den Ebenen der Einfüllöffnungen verlaufende Drehachse drehbar antreibbar ist, so daß die Wiegeräume des Wiegegefäßes mit ihren Einfüllöffnungen abwechselnd durch Drehen des Wiegegefäßes um 180° in eine Position zum abwechselnden Be- und Entladen überführbar sind. Hierbei befindet sich der eine Wiegeraum in einer Position oberhalb der Drehachse in der Befüllposition, seine Einfüllöffnung ist nach oben offen, während der sich unterhalb der Drehachse befindliche Wiegeraum in der Entleerungsposition steht, seine Einfüllöffnung ist offen nach unten. Erfindungsgemäß ist die Einfüllöffnung eines Wiegeraumes auch die Auslaßöffnung oder Entleerungsöffnung, diese beiden Funktionen werden durch die jeweilige Position des Wiegeraumes bestimmt. Aus diesem Grunde bedarf es bei der erfindungsgemäßen Ausbildung des Wiegegefäßes keiner Verschlußklappen für eine Auslaßöffnung während eines Befüllvorganges.

Durch die Erfindung wird auch eine sehr große Entleerungsöffnung, die der Einfüllöffnung entspricht, vorgesehen, wodurch der Entleerungsvorgang beschleunigt abläuft.

Mit der erfindungsgemäßen Vorrichtung ist es somit möglich, durch Drehen des Wiegegefäßes um 180° einen Wiegeraum des Wiegegefäßes aus seiner Befüllposition, in der er mit einer Charge der rieselfähigen Schüttgutkomponenten befüllt wird, in eine Entleerungsposition zu überführen, aus der die eingefüllte Charge ohne nennenswerten Zeitverlust ungehindert durch Auskippen entleert wird. Gleichzeitig wird durch das Überführen des einen Wiegeraumes aus seiner Befüllposition in seine Entleerungsposition der zweite Wiegeraum des Wiegegefäßes, dessen Einfüllöffnung um 180° versetzt zur Einfüllöffnung des ersten Wiegeraumes angeordnet ist, durch die Drehung des Wiegegefäßes um 180° aus der Entleerungsposition in die Befüllposition verbracht, so daß bereits unmittelbar, nachdem der erste Wiegeraum in die Entleerungsposition gebracht worden ist, eine erneute Dosierung einer Charge in den zweiten Wiegeraum erfolgen kann. Gemäß der Erfindung ist das Wiegegefäß quaderförmig ausgebildet und mittels einer auf einer Diagonalen angeordneten Trennwand in zwei gleich große Wiegeräume unterteilt ist. Ein Wiegegefäß mit einer derartigen Ausgestaltung läßt sich besonders einfach und mit niedrigen Kosten herstellen, was die Gesamtherstellungskosten der erfindungsgemäßen Vorrichtung niedrig hält.

Beispielsweise ist es möglich, das Wiegegefäß mit starren Wänden, beispielsweise aus Stahl, Edelstahl herzustellen. Es ist aber auch möglich, etwa zur Dosierung von anhaftenden und/oder pulverförmigen Schüttgütern das Wiegegefäß mit flexiblen Wänden zum Beispiel aus Gummimaterial o.ä. herzustellen.

Um eine besonders schnelle und präzise Bewegbarkeit des Wiegegefäßes und seiner Wiegeräume aus der Befüll- in die Entleerungsposition zu gewährleisten, wird vorgeschlagen, daß das Wiegegefäß schrittweise um 180° drehbar antreibbar ist. Dies kann beispielsweise durch Anordnung eines Schrittmotors oder Pneumatikzylinders als Drehantrieb erfolgen, der eine exakte Einhaltung des Drehwinkels und die damit verbundene Positionierung der Wiegeräume gewährleistet.

Die Bewegung des Wiegegefäßes kann dabei in Abhängigkeit vom gewählten Drehantrieb sowohl reversierend als auch fortgesetzt in einer Drehrichtung erfolgen.

Je nach Art der zu dosierenden rieselfähigen Schüttgutkomponenten ist es dabei im Rahmen der Erfindung möglich, das Wiegegefäß mit Wiegeräumen zur Aufnahme von Chargegewichten von 100 g bis zu 1 t auszubilden.

Das erfindungsgemäße Verfahren zur gravimetrischen Dosierung mehrerer Schüttgutkomponenten zu einer Charge für eine Verarbeitungsmaschine unter Einsatz einer derartigen Wiegevorrichtung beruht darauf, daß jede Schüttgutkomponente einzeln mittels je einer ihr zugeordneten Aufgabevorrichtung in die Wiegevorrichtung dosierbar ist und die Dosierung durch eine Steuerung der Abgabezeit der jeweiligen Schüttgutkomponente aus ihrer Dosiervorichtung erfolgt und für die jeweiligen dosierten Mengen die einzelnen oder summierten Gewichte ermittelt werden.

Im Rahmen der Erfindung wird dazu vorgeschlagen, daß in einem ersten Schritt nach dem Anfahren der Dosiervorrichtung zunächst jede Schüttgutkomponente einzeln in die Wiegevorrichtung eindosiert wird. Dazu wird eine Abgabezeit vorgegeben, die in Abhängigkeit vom Schüttgewicht der Schüttgutkomponente in etwa das gewünschte Sollgewicht innerhalb der Charge erwarten läßt, was beispielsweise rechnerisch ermittelt werden kann. Nachdem die Schüttgutkomponente in der entsprechenden Abgabezeit aus der Aufgabevorrichtung in die Wiegevorrichtung eindosiert wurde, wird sodann von der Wiegevorrichtung das tatsächlich eingefüllte Istgewicht der Schüttgutkomponente ermittelt. Aus einem Vergleich von Soll- und Istgewicht der Schüttgutkomponente kann sodann ein Rechner eine Korrektur der Abgabezeit ermitteln, die für weitere Dosierungen dieser Schüttgutkomponente gespeichert wird. Nun wird die Wiegevorrichtung entleert und die eben beschriebene Einzeldosierung und Verwiegung wird mit der nächsten Schüttgutkomponente vorgenommen, bis letztlich alle Schüttgutkomponenten als Charge aus der Wiegevorrichtung entleert und sämtliche Abgabezeiten, falls erforderlich, korrigiert wurden.

Im nächsten Verfahrenszug werden sodann die einzelnen Schüttgutkomponenten nochmals wiederum jede für sich nacheinander, aber unter Anwendung der korrigierten Abgabezeiten in die Wiegevorrichtung eindosiert und gewogen und nach einer Feinkorrektur der Abgabezeit aus der Wiegevorrichtung entleert.

Die so zu zwei Wiegedurchläufen ermittelten Abgabezeiten der Schüttgutkomponenten sind so präzis, daß im dritten Verfahrenschritt alle Schüttgutkomponenten aufeinanderfolgend und ohne Zwischenentleerung in die Wiegevorrichtung eindosiert werden und somit in dieser aufeinander aufgeschüttet werden. Dabei erfolgt jedoch eine additive Messung der einzelnen Schüttgutgewichte, so daß nochmals eine eventuelle Feinkorrektur der Abgabezeiten erfolgen kann. Nachdem alle Schüttgutkomponenten der Charge in die Wiegevorrichtung eindosiert sind, wird zusätzlich noch das Gesamtgewicht der Charge ermittelt und den weiteren Chargendosierungen als Referenzwert zugrunde gelegt und nachfolgend die komplette Charge aus dem Wiegegefäß entleert.

Die nachfolgenden weiteren Dosierungen von Chargen können nun, da die Abgabezeiten der einzelnen Schüttgutkomponenten präzise einjustiert sind, durch aufeinanderfolgendes oder auch paralleles Betatigen der Abgabevorrichtungen für die Schüttgutkomponenten erfolgen, wobei die Wiegovorrichtung nur noch eine Kontrolle des Gesamtgewichts der jeweils eindosierten Charge vornimmt, bevor diese entleert wird. Die Dosierung einer Charge erfolgt dadurch in besonders hoher Geschwindigkeit.

Zur Kontrolle der Gewichtsanteile der einzelnen Schüttgutkomponenten in der Charge können in regelmäßigen vorbestimmbaren Abständen, etwa bei jeder zehnten oder zwanzigsten Charge, emeut auch Kontrollwiegungen der einzelnen Schüttgutkomponenten und des Gesamtgewichtes der Charge vorgenommen werden, wie sie vorangehend beim dritten Verfahrensschritt beschrieben sind.

Sollten zu irgend einem Zeitpunkt von der Wiegevorrichtung wesentliche Abweichungen vom Gesamtgewicht der Charge oder auch von Gewichtsanteilen der einzelnen Schüttgutkomponenten ermittelt werden, wird eine erneute Einzeldosierung und Verwiegung aller Schüttgutkomponenten und eine erneute Justierung der Abgabezeiten eingeleitet und die vormals beschriebene Abfolge von Verfahrensschritten beginnt von neuem, bis der Betriebszustand wieder erreicht wird.

Die Dosierung der einzelnen Schüttgutkomponenten kann dabei bevorzugt in zwei verschiedenen Geschwindigkeiten erfolgen, wobei mit großer Geschwindigkeit zuerst bis nahe an das gewünschte Gewicht der Komponente herandosiert wird und nachfolgend mit verringerter Geschwindigkeit, aber höherer Genauigkeit bis exakt auf den gewünschten Gewichtsanteil der jeweiligen Schüttgutkomponente dosiert wird. Hierbei ist auch eine Einbeziehung des sogenannten Vorhalts, d.h. der Menge an Schüttgutkomponente, die nach dem ende der Dosierung noch in das Wiegegefäß gelangt, weil sie sich gerade zwischen Wiegegefäß und Aufgabevorrichtung befindet, vorgesehen. Alle diese Parameter können bei der erfindungsgemäßen Justierung der Aufgabezeiten mit berücksichtigt werden.

Das erfindungsgemäße Verfahren ermöglicht es somit, die Chargen mit besonders hoher Genauigkeit und auch Schnelligkeit zu dosieren.

Das erfindungsgemäße Verfahren zur gravimetrischen Dosierung ist nicht auf die Anwendung in einer erfindungsgemäßen Dosiervorrichtung mit drehbarer Wiegezelle und zwei um 180° versetzt zueinander angeordneten Wiegeräumen beschränkt, sondern kann mit Vorteil auch mit anderen Wiegevorrichtungen, beispielsweise den bekannten Wiegevorrichtungen mit einem von einer schwenkbaren Klappe verschlossenen Wiegetrichter angewendet werden.

Die Erfindung wird nachfolgend anhand von Ausführungsbeispielen in der Zeichnung näher erläutert.

Es zeigen
- Fig. 1a: in schematischer Darstellung eine Vorrichtung zur gravimetrischen Dosierung gemäß der Erfindung
- Fig. 1b: die Vorrichtung gemäß Fig. 1a mit um 180° gedrehtem Wiegegefäß
- Fig. 2: in schematischer Darstellung eine Vorrichtung zur gravimetrischen Dosierung in näheren Einzelheiten
- Fig. 3: die Vergrößerte Darstellung des Wiegegefäßes gemäß Fig. 2
- Fig. 4: eine Aufsicht auf das Wiegegefäß gemäß Pfeil A in Fig. 3
- Fig. 5a: die Seitenansicht einer Aufgabeeinrichtung der Vorrichtung gemäß Fig. 2
- Fig. 5b: die Aufsicht auf die Aufgabeeinrichtung gemäß Fig. 5a
- Fig. 6: ein Prinzipschaltbild einer erfindungsgemäßen Vorrichtung zur gravimetrischen Dosierung.

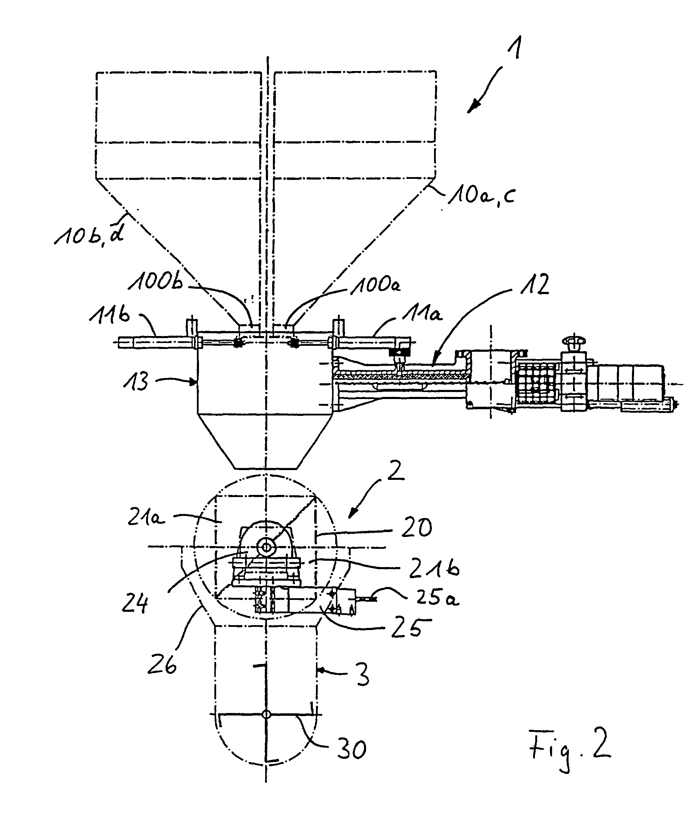

In der Fig. 2 ist eine erfindungsgemäße Vorrichtung zur gravimetrischen Dosierung rieselfähiger Schüttgutkomponenten dargestellt. Sie umfaßt eine Aufgabeeinrichtung 1, aus der über einen Aufgabetrichter 13 jeweils einzelne Schüttgutkomponenten in ein Wiegegefäß 20 einer Wiegeeinrichtung 2 eingefüllt und zu einer Charge mit voreingestellten Gewichtsanteilen der einzelnen Schüttgutkomponenten verwogen werden, wobei die im Wiegefäß 20 verwegene Charge der Schüttgutkomponenten nachfolgend aus dem Wiegegefäß 20 entleert und an einen unterhalb der Wiegeeinrichtung angeordneten Mischer 3 zur Durchmischung der Charge und nachfolgende Weiterleitung an eine nicht dargestellte Verarbeitungsmaschine übergeben wird.

Das Einfüllen und Entleeren der Schüttgutkomponenten in das bzw. aus dem Wiegegefäß erfolgt mit Hilfe der Schwerkraft, von oben in einer Anordnung der Vorrichtungsteile von oben nach unten.

Die Aufgabeeinrichtung 1 der Vorrichtung enthält für jede Schüttgutkomponente eine Dosiervorrichtung, wobei als Dosiervorrichtung entweder ein Einfülltrichter mit steuerbarem Absperrschieber für den Auslaß oder eine Dosierschnecke vorgesehen ist. Bei dem Beispiel gemäß Fig. 2 sind mehrere, beispielsweise vier Einfülltrichter 10 a,b,c,d, die in rechtwinkliger Anordnung nebeneinander auf dem Aufgabetrichter 13 angeordnet sind, vorgesehen. In der Darstellung gemäß Fig. 2 sind dabei zwei Einfülltrichter 10a, 10b sichtbar nebeneinander angeordnet, die weiteren Einfülltrichter 10c, 10d befinden sich deckungsgleich hinter diesen beiden Einfülltrichtern 10 a, b und sind vorzugsweise identisch ausgeführt. Jede Einfüllöffnung 100a,b der beiden dargestellten Einfülltrichter 10 a,b ist mittels eines Absperrschiebers 11 a ,b offen-bzw. schließbar, so daß durch ein zeitlich begrenztes Öffnen der Absperrschieber 11 a, 11b eine Befüllung der in die Einfülltrichter eingefüllten Schüttkomponenten im gewünschten Gewichtsverhältnis der Charge in das Wiegegefäß ermöglicht ist.

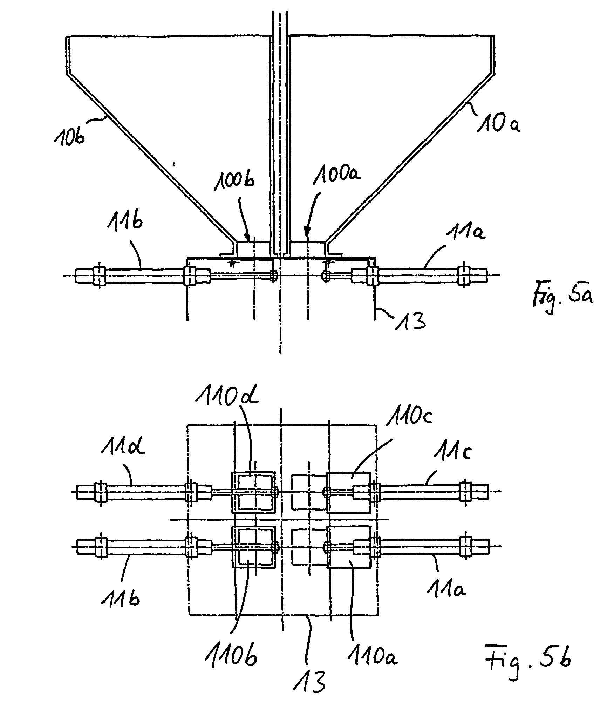

Wie sich auch aus den Darstellungen gemäß den Figuren 5 a, b ergibt, sind somit für die vier beispielhaft vorgesehenen Einfülltrichter 10 a, b, c, d insgesamt vier zugehörige Absperrschieber 11 a, b, c, d mit ihren jeweiligen Schieberplatten 110 a, b, c, d in rechtwinkliger Anordnung vorgesehen. Dabei sind die Absperrschieber 11 a, c in Ihrer Öffnungsstellung und die Absperrschieber 11 b, d in geschlossener Stellung dargestellt.

Neben den Einfülltrichtern 10 a, b, c, d ist des weiteren an der Aufgabeeinrichtung 1 noch eine an sich bekannte Dosierschnecke 12 vorgesehen, die seitlich am Aufgabetrichter 13 angeflanscht ist und die Zudosierung von Schüttgutkomponenten mit besonders niedrigem Gewichtsanteil, bei denen eine sehr präzise Förderung angezeigt ist, ermöglicht.

Generell sollten wegen der höheren Genauigkeit der Dosierung solche Schüttgutkomponenten mit einem Anteil unter ca. 5% am Gesamtgewicht der Charge mittels Dosierschnecken 12 dosiert werden, während Schüttgutkomponenten mit höherem Anteil am Gesamtgewicht wegen des höheren Materialdurchsatzes mittels Einfülltrichtem dosiert werden können.

Durch entsprechende Ausbildung des Aufgabetrichters mit Flanschflächen für Dosierschnecken und Anschlüssen für Einfülltrichter ist es somit beispielsweise möglich, bis zu acht verschiedene Schüttgutkomponenten, vier davon über Einfülltrichter und vier über Dosierschnecken 12, in den Aufgabetrichter 13 einzuleiten.

Über den Aufgabetrichter 13 gelangen die einzelnen Schüttgutkomponenten in ein unterhalb des Aufgabetrichters 13 angeordnetes Wiegegefäß 20 der Wiegeeinrichtung 2, wo sie gravimetrisch zur Charge in den jeweils gewünschten Gewichtsanteilen verwogen werden. Dabei erfolgt die Dosierung der einzelnen Schüttgutkomponenten in den jeweiligen Gewichtsanteilen durch eine Steuerung der Abgabezeit der jeweiligen Aufgabevorrichtung, d.h. Öffnung des Absperrschiebers eines Einfülltrichters bzw. Förderbetrieb der Dosierschnecke über eine entsprechende Zeitdauer.

Um das Auswiegen der in das Wiegegefäß 20 eingefüllten Schüttgutkomponenten zu einer Charge mit den entsprechenden Gewichtsanteilen durch die Steuerung der Abgabezeiten zu ermöglichen, ist das Wiegegefäß 20 freibeweglich an einer geeigneten Wiegezelle 25, beispielsweise einem Dehnungsmeßwertaufnehmer befestigt. Über eine Steuerleitung 25 a erfolgt die Ansteuerung der Absperrschieber 11 und Dosierschnecken 12, so daß die einzelnen Schüttgutkomponenten im jeweiligen Gewichtsanteil innerhalb der Charge abgerufen und im Wiegegefäß 20 angesammelt werden.

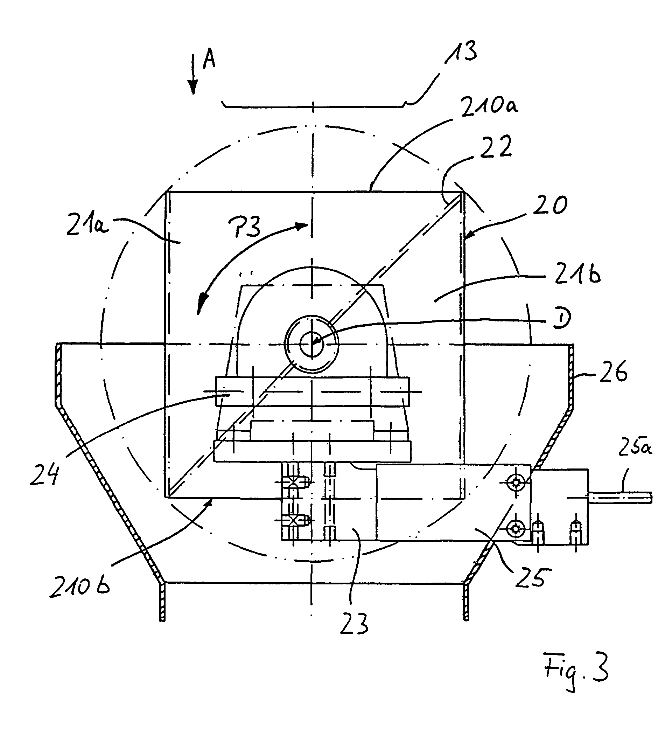

Wie auch der Fig. 3 in weiteren Einzelheiten entnehmbar, ist das Wiegegefäß 20 der Wiegeeinrichtung 2 etwa quaderförmig ausgebildet, wobei entlang einer Diagonalen des Wiegegefäßes 20 eine Trennwand 22 angeordnet ist, die das Wiegegefäß 20 in zwei gleich große Wiegeräume 21 a, b unterteilt. Die Wiegeräume 21 a, b sind dabei so angeordnet, daß ihre Einfüllöffnungen 210 a, b um 180° versetzt zueinander angeordnet sind und jede Einfüllöffnung eine Seite des Quaders umfaßt.

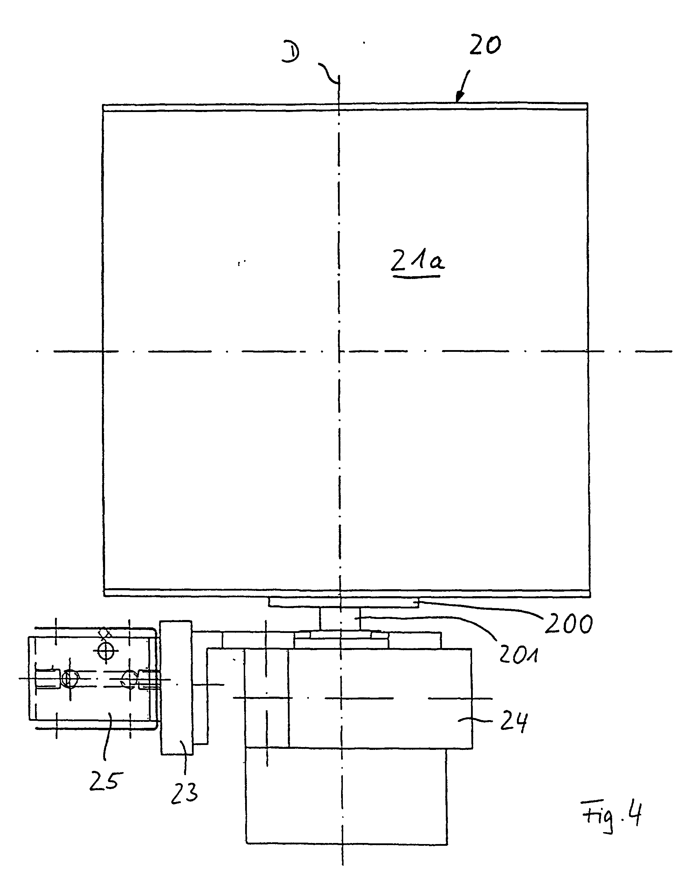

Weiterhin ist das Wiegegefäß 20, wie auch aus der Fig. 4 ersichtlich, einseitig über eine Flanschplatte 200 und eine daran anschließende Achse 201 in einem Drehantrieb 24 drehbar gelagert, der seinerseits mittels eines Flansches 23 an einem freien Ende der Wiegezelle 25 befestigt ist. Mittels dieses Drehantriebes 24 ist es somit möglich, das Wiegegefäß 20 um eine Drehachse D, die sich parallel zu den Einfüllöffnungen 210a, b der beiden Wiegeräume 21 a, b erstreckt, schrittweise um jeweils 180° zu drehen.

Neben der in der Zeichnung beispielhaft dargestellten einseitigen Lagerung des Wiegegefäßes ist es auch möglich, andere Lagerarten, etwa eine durch das Wiegegefäß durchlaufende Achse oder auch eine zweiseitige Lagerung in einer Gabel etc. vorzusehen. Als Drehantrieb 24 sind 12 beispielsweise pneumatische Drehzylinder oder elektrische Schrittmotoren vorgesehen.

Mittels des Drehantriebes 24 ist es damit möglich, die beiden um 180° versetzt zueinander angeordneten Wiegeräume 21 a, b abwechselnd aus einer Befüllposition, in der die jeweilige Einfüllöffnung des Wiegeraumes mit dem Aufgabetrichter 13 korrespondiert, durch Drehung in Pfeilrichtung P3 in eine um 180° versetzte Entleerungsposition zu überführen.

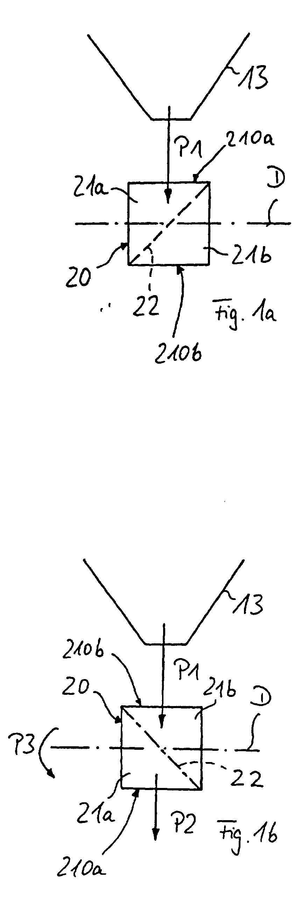

Dies ist in den Fig. 1 a und 1 b schematisiert dargestellt. Der in Fig. 1 a beispielhaft in der Befüllposition befindliche Wiegeraum 21 a des Wiegegefäßes 20 - hierbei befindet sich die Öffnung 210 a des Wiegeraumes 21 a oberhalb der Drehachse D und unterhalb des Aufgabetrichters 13 - wird gemäß Pfeil P1 über den Aufgabetrichter 13 mit den einzelnen Schüttgutkomponenten in den jeweiligen Gewichtsanteilen der Charge befüllt. Nachfolgend wird der derart befüllte Wiegeraum 21 a durch Drehung des Wiegegefäßes 20 um die Drehachse D um 180° in Pfeilrichtung P3 in seine Entleerungsposition gemäß Fig. 1 b überführt, so daß die im Wiegeraum 21 a des Wiegegefäßes 20 eingefüllte Charge gemäß Pfeil P2 über die sich nun unten befindende Einfüllöffnung 210a des Wiegeraumes 21 a rasch und ohne Zeitverzug durch Auskippen entleerbar ist.

Gleichzeitig wird durch die Drehung des Wiegegefäßes 20 gemäß Pfeil P3 um 180° der sich zuerst gemäß Fig. 1 a in seiner Entleerungposition befindliche Wiegeraum 21 b der Wiegezelle 20 in seine Befüllposition oberhalb der Drehachse D verbracht, in der seine Einfüllöffnung 210b mit dem Aufgabetrichter 13 korrespondiert. Somit kann bereits unmittelbar nach Drehen des Wiegegefäßes und dem dadurch hervorgerufenen schlagartigem Entleeren einer Charge aus dem einen Wiegeraum der zweite Wiegeraum mit einer neuen Charge befüllt werden.

Stillstandszeiten zum erneuten Befüllen, um eine Entleerung des Wiegeraumes und Null setzen der Wiegezelle abzuwarten, werden somit auf Sekundenbruchteile reduziert, so daß die Vorrichtung Chargen in kürzerer Zeitabfolge abwiegen kann und auch sehr leistungsfähige Verarbeitungsmaschinen problemlos mit der geforderten Anzahl von Chargen versorgen kann. Darüber hinaus werden durch die plötzliche vollständige Entleerung des Wiegeraumes auch nur äußerst geringe Vibrationen innerhalb der Vorrichtung erzeugt, die sich in einer hohen Wiegegenauigkeit niederschlagen.

Den Fig. 2 und 3 ist weiterhin entnehmbar, daß das Wiegegefäß 20 in ihrem unteren Bereich, beispielsweise bis in Höhe der Drehachse D innerhalb eines Entleerungstrichters 26 gehalten ist, der das Wiegegefäß in diesem Bereich umgibt und die aus den Wiegeräumen 21 a, b entleerten Charge zuverlässig auffängt.

Über diesen Entleerungstrichter 26 gelangt die Charge sodann in den unterhalb des Entleerungstrichters angeordneten Mischer 3, siehe hierzu Fig.3, mittels dessen die Charge von im Mischer 3 drehbar angeordneten Mischerarmen 30 zu einer hamogenen Mischung vermischt und nachfolgend an eine hier nicht dargestellte Verarbeitungsmaschine abgegeben wird.

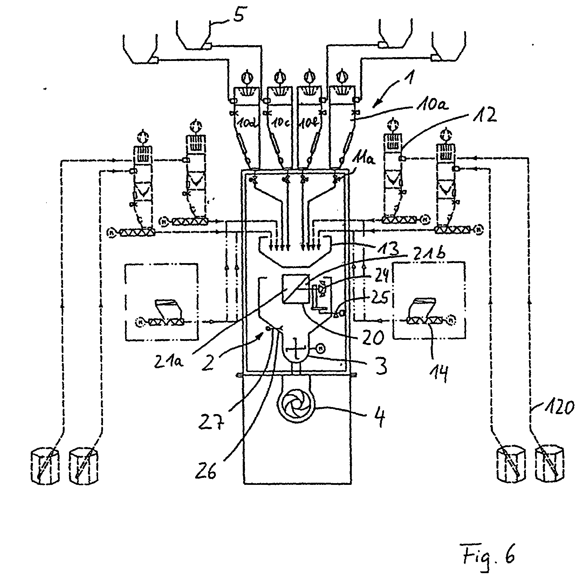

Die Vorrichtung zur gravimetrischen Dosierung, wie sie vorangehend erläutert worden ist, ist beispielsweise zur Zuführung von Rohstoffen zu einer kunststoffverarbeitenden Maschine, wie einem Extruder oder einer Spritzgußanlage besonders geeignet. Beispielsweise ist es möglich, wie aus dem in der Fig. 6 dargestellten Prinzipschaltbild ersichtlich, bis zu vier Schüttgutkomponenten über von Silos 5 gespeiste Einfülltrichter 10 und weitere vier Schüttgutkomponenten mit vergrößerter Genauigkeit über Dosierschnecken 12 oder weitere Aufgabeschnecken 14 mittels Saugschnorcheln 120 aus Containern oder anderen Behältnissen in den Aufgabetrichter 13 zu befördern, aus dem sie nachfolgend in das Wiegegefäß 20 mit den beiden Wiegeräumen 21a,b im Gewichtsverhältnis der Charge gelangen. Von dort wird die derart hergestellte Charge sodann in den Entleerungstrichter durch Drehung der Wiegezelle um 180°ausgekippt und im Mischer 3 homogenisiert, bevor sie die Verarbeitungsmaschine, wie Extruder 4 zugeführt wird. Sobald ein unterhalb des Wiegefäßes 20 angeordneter Füllstandsmelder 27 ein Absinken des in den Mischer 3 eingefüllten Chargenmaterials unter einen bestimmten Wert signalisiert, wird eine Drehung der Wiegezelle um 180° Über den Drehantrieb 24 veranlaßt, so daß die nächste in einem der Wiegeräume 21 a bzw. 21 b bereits ausgewogene Charge in den Mischer 3 abgegeben wird und nachfolgend in die Verarbeitungsmaschine 4 gelangt.

Bei einer solchen Anlage kann das erfindungsgemäße Verfahren zum genauen Dosieren und Kontrollieren der Chargen mit Vorteil angewendet werden. Selbstverständlich ist die erfindungsgemäße Vorrichtung und das Verfahren auch an anderen Anlagen, die eine Dosierung rieselfähiger Schüttgüter benötigen, mit Vorteil anwendbar.

Die erfindungsgemäße Vorrichtung zur gravimetrischen Dosierung ermöglicht somit das hochgenaue Zudosieren einzelner Schüttgutkomponenten zu einer Charge, die insbesondere auch zur Versorgung sehr leistungsfähiger Verarbeitungsmaschinen geeignet ist und mit geringen Kosten im Vergleich zu den bisher vorgeschlagenen gravimetrischen Dosiervorrichtungen herstellbar ist.

## Patentansprüche

1. Vorrichtung zur gravimetrischen Dosierung rieselfähiger Schüttgutkomponenten zu einer Charge für eine Verarbeitungsmaschine, wobei die besagte Vorrichtung ein Wiegegefäß (20) enthält, welches über Aufgabeeinrichtungen (1) mit den zu dosierenden Schüttgutkomponenten befüllbar ist, wobei das Wiegegefäß (20) von einem Wiegeorgan frei beweglich getragen ist, so daß eine Auswiegung und davon abhängige Steuerung der Aufgabeeinrichtungen (1) der Schüttgutkomponenten ermöglicht ist und das Wiegegefäß (20) nach seiner Befüllung mit einer Charge entleerbar ist, wobei das Wiegegefäß (20) in zwei Wiegeräume (21a, b) unterteilt ist, deren Einfüllöffnungen (210a, b) um 180° versetzt zueinander ausgebildet sind und das Wiegegefäß (20) um eine parallel zu den Ebenen der Einfüllöffnungen (210a, b) verlaufende Drehachse (D) drehbar antreibbar ist, so daß die Wiegeräume (21 a, b) des Wiegegefäßes (20) abwechselnd durch Drehen des Wiegegefäßes (20) um 180° in eine Position zum abwechselnden Be- und Entladen überführbar sind,**dadurch gekennzeichnet, daß** das Wiegegefäß (20) quaderförmig ausgebildet ist, wobei entlang einer Diagonalen des Wiegegefäßes (20) eine Trennwand (22) angeordnet ist, die das Wiegegefäß (20) in zwei gleich große Wiegeräume (21a, b) unterteilt und wobei die Wiegeräume (21a, b) so angeordnet sind, daß ihre Einfüllöffnungen (210a, b) um 180° versetzt zueinander angeordnet sind und jede Einfüllöffnung eine Seite des Quaders umfaßt.

2. Vorrichtung nach Anspruch 1, **dadurch gekennzeichnet, daß** das Wiegegefäß (20) schrittweise um 180° drehbar antreibbar ist.

3. Vorrichtung nach Anspruch 1 oder 2, **dadurch gekennzeichnet, daß** das Wiegegefäß (20) mit Wiegeräumen zur Aufnahme von Chargengewichten von 100 g bis zu 1 t ausgebildet ist.

4. Verfahren zur gravimetrischen Dosierung rieselfähiger Schüttgutkomponenten zu Chargen aus vorgehbaren Gewichtsanteilen der Schüttgutkomponenten für eine Verarbeitungsmaschine unter Einsatz eines in eine Befüllungs- und Entleerungsposition überführbaren Wiegegefäßes (20) mit Wiegeeinrichtung (2), wobei die Schüttgutkomponenten unabhängig voneinander mittels einer Steuerung der jeweiligen Abgabezeit derselben in das Wiegegefäß (20) dosierbar sind, **dadurch gekennzeichnet, daß** aufeinanderfolgend hergestellte Chargen in der Weise erhalten werden daß,
a) eine erste Charge hergestellt wird, indem jede Schüttgutkomponente einzeln in einer dem jeweils vorgegebenen Gewichtsanteil als Soll-Gewicht entsprechenden vorgegebenen Abgabezeit in das Wiegegefäß (20) dosiert wird und nachfolgend das erhaltene Ist-Gewicht der so dosierten Schüttgutkomponente gemessen und mit dem Soll-Gewicht verglichen wird und hieraus eine Korrektur der vorgegebenen Abgabezeit ermittelt wird und dann die Schüttgutkomponente aus dem Wiegegefäß (20) entleert wird,
b) eine zweite Charge hergestellt wird, indem jede Schüttgutkomponente einzeln unter Verwendung der bei der Herstellung der ersten Charge für dieselbe ermittelten und korrigierten Abgabezeit in das Wiegegefäß (20) dosiert wird und nachfolgend das erhaltene Ist-Gewicht der so dosierten Schüttgutkomponente gemessen und mit dem Soll-Gewicht verglichen wird und hieraus eine weitere Korrektur der Abgabezeit ermittelt wird und dann die Schüttgutkomponente aus dem Wiegegefäß (20) entleert wird,
c) eine dritte Charge hergestellt wird, indem die einzelnen Schüttgutkomponenten aufeinanderfolgend in das Wiegegefäß (20) ohne Zwischenentleerung desselben und unter Verwendung der bei der Herstellung der zweiten Charge ermittelten und korrigierten Abgabezeiten dosiert werden und nach dem Dosieren jeder einzelnen Schüttkomponente das Ist-Gewicht der jeweils zuletzt eindosierten Schüttgutkomponente ermittelt und mit dem Soll-Gewicht verglichen wird und hieraus eine Korrektur der Abgabezeit dieser Schüttgutkomponente ermittelt wird und nach dem Dosieren aller Schüttgutkomponenten das Gesamtgewicht der dritten Charge ermittelt wird,
d) das Gesamtgewicht der dritten Charge als Referenzwert der Herstellung weiterer Chargen zugrundegelegt wird, und weitere Chargen durch Dosieren der Schüttgutkomponenten unter Verwendung der bei der Herstellung der dritten Charge ermittelten und korrigierten Abgabezeiten hergestellt werden und hierbei lediglich das jeweilige Gesamtgewicht der so hergestellten Chargen ermittelt und mit dem Referenzwert verglichen wird.

## Claims

1. Apparatus for the gravimetric dosing of fluid bulk material components to form a charge for a processing machine, wherein the said apparatus contains a weighing container (20), which is fillable via loading devices (1) with the bulk material components to be dosed, wherein the weighing container (20) is supported by a weighing member so as to be freely moveable, such that it is possible to balance out and, dependent thereon, control the loading devices (1) of the bulk material components and to empty the weighing container (20) once it has been filled with a charge, wherein the weighing container (20) is divided into two weighing chambers (21a, b), the filling openings (210a, b) of which are configured offset to each other by 180° and the weighing container (20) is rotatably drivable about an axis of rotation (D), which extends parallel to the planes of the filling openings (210a, b), such that the weighing chambers (21 a, b) of the weighing container (20) are transferable alternately into a position for the alternate loading and unloading operation by rotating the weighing container (20) by 180°. **characterised in that** the weighing container (20) is square-shaped, wherein along one diagonal of the weighing container (20) there is a dividing wall (22), which divides the weighing container (20) into two weighing chambers (21 a, b) of equal size, and wherein the weighing chambers (21a, b) are disposed in such a manner that their filling openings (210a, b) are disposed offset to each other by 180° and each filling opening comprises one side of the square.

2. Apparatus according to claim 1, **characterised in that** the weighing container (20) is rotatably drivable about 180° in a gradual manner.

3. Apparatus according to claim 1, **characterised in that** the weighing container (20) is configured with weighing chambers for the accommodation of charge weights between 100g and 1 t.

4. Method for the gravimetric dosing of fluid bulk material components to form charges from pre-determinable proportions by weight of the bulk material components for a processing machine by using a weighing container (20), which is transferable into a filling position and an emptying position and is provided with a weighing device (2), wherein the bulk material components are dosable into the weighing container (20) independently of each other by means of a controlling of the respective delivery time of the same, **characterised in that** charges produced consecutively are obtained in such a manner that,
a) a first charge is produced by each bulk material component being dosed individually into the weighing container (20) at a predetermined delivery time, which corresponds to the respectively predetermined proportion by weight provided as the required weight, and subsequently the obtained actual weight of the bulk material component dosed in this manner is measured and compared with the required weight and a correction to the predetermined delivery time is determined therefrom and the bulk material component is then emptied from the weighing container (20),
b) a second charge is produced by each bulk material component being dosed into the weighing container (20) individually by using the delivery time, which was determined in the production of the first charge for the same and was corrected, and subsequently the actual weight obtained of the bulk material component dosed in this manner is measured and compared with the required weight and another correction to the delivery time is determined therefrom and the bulk material component is then emptied out of the weighing container (20),
c) a third charge is produced by the individual bulk material components being dosed consecutively into the weighing container (20) without said weighing container being emptied in between and by using the delivery time, which was determined during the production of the second charge and corrected, and after the dosing of every one of the individual bulk material components the actual weight of the bulk material component dosed at the end is determined and is compared with the required weight and a correction to the delivery time of this bulk material component is determined and after the dosing of all the bulk material components the overall weight of the third charge is determined,
d) the overall weight of the third charge as a reference value is taken as a basis for the production of other charges, and other charges are produced by dosing the bulk material components using the delivery times determined during the production of the third charge and corrected and at this time simply the respective overall weight of the charges produced in this manner is determined and compared with the reference value.

## Revendications

1. Dispositif de dosage gravimétrique de composants en vrac pouvant couler pour former une charge destinée à une machine de traitement, dans lequel :
- un récipient de pesée (20) peut être rempli des composants en vrac à doser par l'intermédiaire de dispositifs d'alimentation (1)
- le récipient de pesée (20) est monté librement mobile sur un organe de pesée permettant ainsi une dépesée des composants en vrac et la commande qui en dépend des dispositifs d'alimentation (1), ainsi que la vidange du récipient de pesée après son remplissage par une charge,
- le récipient de pesée (20) est divisé en deux volumes de pesée (21a, b) dont les ouvertures de remplissage (210a, b) sont décalées de 180° l'une par rapport à l'autre,
- le récipient de pesée (20) peut être entraîné en rotation autour d'un axe D parallèle au plan des ouvertures de remplissage (210a, b) de sorte que les volumes de pesée (21a, b) du récipient de pesée (20) peuvent passer alternativement par rotation de 180° d'une position de chargement à une position de déchargement,
**caractérisé en ce que**
le récipient de pesée (20) a la forme d'un parallélépipède et comporte le long d'une de ses diagonales une paroi séparatrice (22) qui divise le récipient de pesée (20) en deux volumes de pesée (21a, b) de même grandeur, disposés de manière que leurs ouvertures de remplissage (210a, b) sont décalées de 180° l'une par rapport à l'autre, chacune d'elles comprenant un côté du parallélépipède.

2. Dispositif selon la revendication 1,
**caractérisé en ce que**
le récipient de pesée (20) peut être entraîné de manière à tourner de 180° pas à pas.

3. Dispositif selon la revendication 1 ou 2,
**caractérisé en ce que**
le récipient de pesée (20) est constitué de volumes de pesée pour accueillir des charges dont le poids va de 100 g à 1 t.

4. Procédé de dosage gravimétrique de composants en vrac pouvant couler pour donner des charges constituées de fractions pondérales prédéfinies de composants en vrac, et destinées à une machine de traitement, avec utilisation d'un récipient de pesée (20) muni d'un dispositif de pesée (2) et qui peut être amené en position de remplissage et en position de vidange, les composants en vrac pouvant être dosés chacun indépendamment les uns des autres par commande du temps pendant lequel le récipient de pesée (20) est alimenté en composant,
**caractérisé en ce que**
les charges produites successivement sont obtenues de la manière suivante :
a) une première charge est produite en dosant chacun des composants individuels en vrac par l'utilisation d'un temps d'alimentation du récipient de pesée (20) prédéfini correspondant à la fraction pondérale prédéfinie comme poids de consigne, ensuite le poids réel obtenu du composant en vrac ainsi dosé est mesuré et comparé au poids de consigne de sorte qu'une correction du temps d'alimentation prédéfini est établi, le composant en vrac étant ensuite vidangé du récipient de pesée (20),
b) une deuxième charge est produite en dosant chacun des composants individuels en vrac par l'utilisation du temps d'alimentation du récipient de pesée (20) établi et corrigé lors de la production de la première charge, ensuite le poids réel obtenu du composant en vrac ainsi dosé est mesuré et comparé au poids de consigne de sorte qu'une autre correction du temps d'alimentation prédéfini est établie, le composant en vrac étant ensuite vidangé du récipient de pesée (20),
c) une troisième charge est fabriquée en dosant successivement les composants individuels en vrac introduits dans le récipient de pesée (20) sans vidange intermédiaire de ce récipient et en utilisant les temps d'alimentation établis et corrigés lors de la production de la deuxième charge, puis après le dosage de chaque composant individuel le poids réel correspondant de ce composant dosé est établi et comparé au poids de consigne de sorte qu'une correction du temps d'alimentation de ce composant est établie, le poids total de la troisième charge étant déterminé après le dosage de tous les composants en vrac, et
d) le poids total de la troisième charge est utilisé comme valeur de référence pour la production des charges suivantes qui sont réalisées en dosant les composants en vrac par utilisation des temps d'alimentation établis et corrigés lors de la production de la troisième charge, le poids total de chaque charge ainsi fabriquée étant établi et comparé à la valeur de référence.
